**Europäisches Patentamt**

**European Patent Office**

**Office européen des brevets**

(11) Veröffentlichungsnummer: **0 324 944 B1**

# EUROPÄISCHE PATENTSCHRIFT

(45) Veröffentlichungstag der Patentschrift: **06.05.92**

(51) Int. Cl.⁵: **G01T 1/12**, G01T 1/06

(21) Anmeldenummer: **88120700.5**

(22) Anmeldetag: **10.12.88**

(54) **Fluoreszenzglasdosimeter.**

(30) Priorität: **28.12.87 JP 334649/87**

(43) Veröffentlichungstag der Anmeldung:
**26.07.89 Patentblatt  89/30**

(45) Bekanntmachung des Hinweises auf die
Patenterteilung:
**06.05.92 Patentblatt  92/19**

(84) Benannte Vertragsstaaten:
**CH DE FR GB LI NL SE**

(56) Entgegenhaltungen:
**DE-A- 3 110 161**
**US-A- 2 750 515**
**US-A- 3 042 802**
**US-A- 3 426 197**

**KfK-Nachrichten, Kernforschungszentrum
Karlsruhe, Jahrgang 4/84, Seiten 226-230. E.
Pietsch: "Neuere Entwicklungen auf dem
Gebiet der Strahlenschutzmesstechnik"**

(73) Patentinhaber: **KERNFORSCHUNGSZENTRUM
KARLSRUHE GMBH
Weberstrasse 5 Postfach 3640
W-7500 Karlsruhe 1(DE)**

Patentinhaber: **TOSHIBA GLASS CO., LTD.
3583-5 Kawajiri Yoshida-cho
Haibara-gun Shizuoka-ken(JP)**

(72) Erfinder: **Burgkhardt, Bertram
Bertha-v.Suttner-Strasse 7a
W-7500 Karlsruhe 1(DE)**
Erfinder: **Piesch, Ernst
Württemberger Strasse 5
W-7514 Egg.-Leopoldshafen(DE)**
Erfinder: **Röber, Hans-Gerd
Dornröschenweg 24
W-7500 Karlsruhe(DE)**
Erfinder: **Yasuhi, Mawatari
3583-5 Kawajiri Yoshida-cho
Haibara-gun Shizuoka-ken(JP)**
Erfinder: **Toru, Ikegami
3583-r Kawajiri Yoshida-cho
Haibara-gun Shizuoka-ken(JP)**
Erfinder: **Motoyuki, Sato
3583-5 Kawajiri Yoshida-cho
Haibara-gun Shizuoka-ken(JP)**

(74) Vertreter: **Gottlob, Peter
Kernforschungszentrum Karlsruhe GmbH
Abt. PAL Weberstrasse 5 Postfach 3640
W-7500 Karlsruhe 1(DE)**

## Beschreibung

Die vorliegende Erfindung betrifft ein Fluoreszenzglasdosimeter mit verbessertem Glaselementhalter und Haltergehäuse zur Messung der Äquivalentdosis, der ein Arbeiter beim Umgang mit Strahlenquellen ausgesetzt ist, der räumlichen Dosisverteilung innerhalb und außerhalb einer Bestrahlungsanlage, beispielsweise eines nuklearen Leistungsreaktors bzw. der Äquivalentdosis von Beschäftigten in der Strahlentherapie. Ein derartiges Dosimeter ist beschrieben in Kfk Nachrichten, Kernforschungszentrum Karlstruhl, Jahrgang 16 4184, seiten 226-230; E. Pietsch: "Neurere Entwicklungen auf dem Gebiet der Strahlenschutzmeßtechnik".

Die Gefahr, der ein Lebewesen und die Umwelt ausgesetzt sind, steigt im allgemeinen mit dem Betrag der absorbierten Energie, d.h. mit zunehmender Strahlungsdosis. Deshalb muß beim Bau eines Kernreaktors, eines Beschleunigers, eines Röntgengenerators bzw. einer Radioisotopenanlage das Strahlungsfeld bekannt sein, und die Strahlenexposition von Operateuren und Benutzern gemessen werden. Aus diesem Grund nimmt die Bedeutung des Dosimeters bei der genauen Messung der Strahlendosis zu.

Das Fluoreszenzglasdosimeter besteht aus einem Glaselementhalter zur Aufnahme eines Fluoreszenzglaselements und einem Haltergehäuse zur Aufnahme des Halters. Während des Einsatzes wird das Dosimeter mit dem Glaselementhalter an einen geeigneten Ort gebracht bzw. dort installiert, und nach der Auswertung wird eine große Anzahl von Dosimetern mit Hilfe eines Magazins automatisch bzw. von Hand zur Messung der Äquivalentdosis in ein Auswertegerät gebracht.

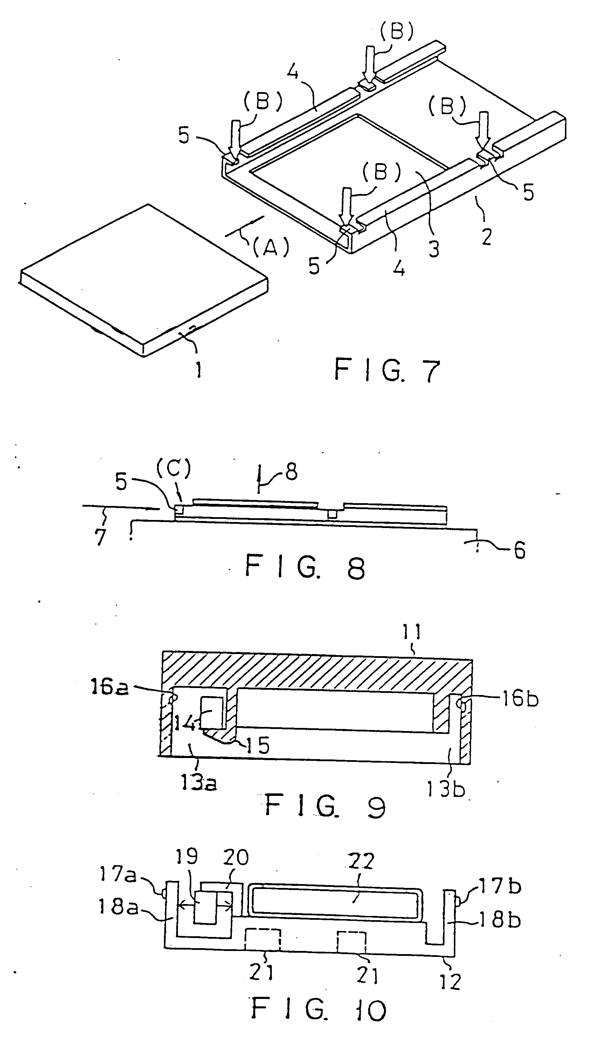

In dem oben beschriebenen konventionellen Fluoreszenzglasdosimeter, insbesondere im Glaselementhalter gemäß Abb. 7, der internen Stand der Technik darstellt, wird ein Fluoreszenzglaselement 1 in den äußeren Halter 2 in der durch einen Pfeil (A) in Abb. 7 angezeigten Richtung gleitend eingeschoben. Im äußeren Halter 2 entsteht dadurch ein Fluoreszenzlichtaustrittsfenster 3, dessen Abmessungen kleiner sind als das Fluoreszenzglaselement 1, und zur Aufnahme des Glaselements 1 befinden sich in den beiden Seitenkanten des äußeren Halters 2 senkrecht zur Einschubrichtung ]-förmige gebogene Segmente 4, in die das Glaselement eingeschoben wird. Sperrklinken 5 sind an Teilen der gebogenen Segmente 4 angebracht, d.h. am Ende der Seite, an der das Glaselement eingeschoben wird, sowie in einem bestimmten Abstand zum Ende.

In einem Glaselementhalter dieses Typs wird daher das Fluoreszenzglaselement 1 in eine vorgegebene Position im äußeren Halter 2 in der durch einen Pfeil (A) in Abb. 7 angezeigten Richtung gebracht. Dann wird auf die Sperrklinken 5 in der durch einen Pfeil (B) in Abb. 7 angezeigten Richtung ein Druck ausgeübt, so daß sie sich verbiegen. Dadurch wird das Fluoreszenzglaselement 1 im äußeren Halter 2 befestigt. Zur Messung der Äquivalentdosis wird ein Glaselementhalter gemäß Abb. 8 auf den Meßtisch 6 gelegt. Fallen nun ultraviolette Strahlen 7 von einer Schmalseite des Meßtischs auf das Fluoreszenzglaselement 1 in der durch einen Pfeil in Abb. 8 gezeigten Richtung ein, wird das durch Radiophotolumineszenz hervorgerufene Fluoreszenzlicht von der größeren Fläche des Fluoreszenzglaselements 1 senkrecht zur Einfallsrichtung der ultravioletten Strahlung nachgewiesen, und die Äquivalentdosis wird aufgrund der Intensität des Fluoreszenzlichts 8 bestimmt.

Das Gehäuse zur Aufnahme des Glaselementhalters ist aufgeteilt in ein oberes Gehäuseteil 11 und ein unteres Gehäuseteil 12, wie in Abb. 9 und 10 gezeigt. In unmittelbarer Nähe der Seitenwände des oberen Gehäuseteils 11 verlaufen nach innen die Gleitrillen 13a und 13b. Zwischen den Gleitrillen 13a und 13b hängt ein L-förmiges vorstehendes Sperrteil 15. Die Bezugsnummern 16a und 16b bezeichnen die Vertiefungen in den Rillenflächen. Auf der Außenseite des unteren Gehäuseteils 12 befinden sich die Gleitsegmente 18a und 18b, die außen mit den vorstehenden Teilen 17a und 17b versehen sind, welche in die Vertiefungen 16a bzw. 16b einrasten. Im Innern des unteren Gehäuseteils 12 befindet sich ein Metallteil 19, das normalerweise in der in Abb. 10 durch einen Pfeil angezeigten Richtung mittels Blattfeder nach rechts verschoben wird. Am Boden des unteren Gehäuseteils 12 ist ein vorstehendes Sperrteil 20 in Form eines umgedrehten L angebracht. An der Bodenaußenseite des unteren Gehäuseteils 12 befinden sich in bestimmten Abständen vier quadratische Öffnungen 21 als Halterung. Die Bezugsnummer 22 bezeichnet den zur Aufnahme vorgesehen Glaselementhalter.

Nach Aufnahme des in Abb. 7 gezeigten Glaselementhalters in Behälter 22 des unteren Gehäuseteils 12 werden die Gleitsegmente 18a und 18b des unteren Gehäuseteils 12 in die Gleitrillen 13a und 13b eingeführt. Davor wird das Metallteil 19 des unteren Gehäuseteils 12 an die Innenfläche der in Form eines umgedrehten L angebrachten, vorstehenden Sperre 20 gedrückt. Wenn das untere Gehäuseteil 12 in das obere Gehäuseteil 11 eingeschoben wird, drückt das L-förmige vorstehende Teil 15 des oberen Gehäuseteils 11 das Metallteil 19 in Abb. 10 nach links und schiebt es in die in Abb. 10 gezeigte Position. Sobald das untere Gehäuseteil 12 vollständig eingeschoben ist, wird das Metallteil 19 durch die Blattfeder in die ursprüngliche Lage zurückgedrückt und zwischen den vorstehenden Teilen 15 und 20 so eingeklemmt, daß eine Sperre entsteht. Die vorstehenden Teile 17a und 17b des unteren Gehäuseteils 12 rasten in die Vertiefungen 16a und 16b des oberen Gehäuseteils ein und bilden eine zusätliche Sperre.

Um die Sperre zu lösen, wird ein Magnet von außen an das Gleitsegment 18a herangeführt, und das Metallteil 19 wird auf der Innenseite des zu lösenden Gleitsegments 18a angezogen. Auf diese Weise kann das untere Gehäuseteil 12 vom oberen Gehäuseteil 11 abgetrennt werden.

Mit dem oben genannten Glaselementhalter gibt es jedoch folgende Probleme: Ersten sind im Glaselementhalter beide Seitenkanten des Fluoreszenzglaselements 1 senkrecht zur Einschubrichtung des Glaselements von den gebogenen Segmenten 4 des äußeren Halters 2 abgedeckt. Andere Kanten, insbesondere der Kantenbereich (C) auf der für die Messung vorgesehenen Seite der Glasoberfläche, sind dagegen nicht abgedeckt. Daher ändert sich die Nachweisempfindlichkeit mit der Breite der abgeschrägten Kante (C), und diese Veränderung beeinflußt die Meßgenauigkeit beträchtlich. Das Fluoreszenzglaselement 1 wird durch Biegen der Sperrklinken 5 des äußeren Halters 2 befestigt. Das Biegen ist jedoch umständlich und kann das Fluoreszenzglaselement 1 beschädigen.

Die Gehäuseteile 11 und 12 werden von Hand im Haltergehäuse befestigt. Zum Öffnen des Gehäuses wird in vier quadratische Öffnungen 21 des unteren Gehäuseteils 12 eine Einspannvorrichtung zur Befestigung eingeführt, und dann wird das obere Gehäuseteil 11 entfernt. Der Gleitweg entspricht jedoch der Wandstärke, d.h., er ist kurz. Aus diesem Grund ist es schwierig, beim Öffnen des Gehäuses auf die Gehäuseteile 11 und 12 eine relativ starke und gleichmäßige Kraft auszuüben. Wenn das obere Gehäuseteil 12 bei leichter Schräglage entfernt wird, können außerdem die Gleitsegmente 18a und 18b beschädigt werden. Bei einem Fluoreszenzglasdosimetersystem wird eine große Anzahl von Dosimetern nacheinander in ein Dosimeteranzeigegerät eingebracht, wobei der Glaselementhalter zum Messen der Strahlendosis aus jedem Gehäuse entfernt wird. Sobald ein bestimmter Dosiswert gemessen wird, nimmt man den Glaselementhalter aus den Gehäuseteilen 11 und 12 heraus. Da das Gehäuse in vertikaler Richtung geöffnet/geschlossen wird, ist es schwierig, den Öffnungs- und Schließvorgang zu automatisieren. Aus diesem Grund kann das Gehäuse nicht schnell und sicher geöffnet bzw. geschlossen werden. Die Gehäuseteile 11 und 12 werden durch Einschieben des Metallteils 19 zwischen die vorstehenden L-förmigen Sperren 15 und 20 verriegelt. Die Gehäuseteile können jedoch nicht optimal verriegelt werden, weil die Gleitlänge der Kapselstärke entspricht und damit kurz ist. An den Gleitteilen sind die Vertiefungen 16a und 16b sowie die vorstehenden Teile 17a und 17b als zusätzliche Sperre angebracht. Der Verriegelungsmechanismus ist deshalb recht kompliziert und die Wirksamkeit automatisch geringer. Zum Öffnen des Gehäuses wird die Einspannvorrichtung in die quadratischen Öffnungen 21 des unteren Gehäuseteils 12 eingeschoben. Die Außenmaße der Kapsel sind klein, beispielsweise 2 cm auf 3 cm, und die Größe jeder quadratischen Öffnung 21 ist äußerst gering. Aus diesem Grund ist es schwierig, die Einspannvorrichtung einzuschieben. Da die Gehäuseteile 11 und 12 aus Spritzgußkunststoff gefertigt sind, kann man keine Paßstücke zur Befestigung der Einspannvorrichtung in den quadratischen Öffnungen 21 herstellen. Aus diesem Grund wird das untere Gehäuseteil 12 beim Entfernen des oberen Gehäuseteils häufig von der Einspannvorrichtung abgetrennt und das Abnehmen dadurch behindert.

Aus der US-A-2 750 515 ist ein Fluoreszenzglasdosimeter bekannt, bei dem Glas zusammen mit Abschirmungsplatten in einem runden, zweiteiligen Gehäuse gehaltert wird. Das Gehäuse wird zusammengehalten durch drei am Oberteil befestigte Zapfen die in vorgesehene Löcher im Unterteil ragen und die zur Sicherung durch Hitzeeinwirkung fixiert werden.

Des weiteren ist aus der US-A-3 042 802 ein Fluoreszenzglasdosimeter mit einem runden, zweiteiligen Gehäuse bekannt, bei dem die beiden runden Gehäuseteile durch Außen- und Innengewinde miteinander verschraubt sind.

Beide Dosimeter lassen sich nicht automatisch auswerten.

Die vorliegende Erfindung soll die oben genannten Probleme lösen. Ihr Ziel ist ein Fluoreszenzglasdosimeter, in das ein Fluoreszenzglaselement leicht eingeschoben werden kann, wobei die Kanten des Glaselements ausreichend abgedeckt, die Kapsel sicher verriegelt und Einführen sowie Entfernen der Gehäuseteile ohne Schwierigkeit durchgeführt werden können.

Dies wird erreicht durch ein Fluoreszenzglasdosimeter mit den im Anspruch 1 genannten Merkmalen. Vorteilhafte Ausbildungsformen sind in den abhängigen Ansprüchen definiert.

Bei der Vorrichtung gemäß der Erfindung wird durch den Einsatz eines Fluoreszenzglaselements in einem inneren Halter ein Randbereich einer Fluoreszenzlichtaustrittsfläche des Fluoreszenzglaselements durch einen Maskenrahmen des inneren Halters überdeckt.

Durch Befestigung des inneren Halters mit dem Fluoreszenzglaselement an einen äußeren Halter wird der Randbereich der anderen Fluoreszenzlichtaustrittsfläche des Fluoreszenzglaselements mit einem Maskenrahmen des äußeren Halters maskiert. Deshalb können sämtliche Randbereiche der Fluoreszenzlichtaustrittsflächen des Fluoreszenzglaselements abgedeckt werden, und die Nachweisempfindlichkeit ist durch Veränderung der Breite der Glasabschrägung nicht mehr beeinflußbar.

Durch Vorsehen von Führungselementen in Längsrichtung im oberen und unteren Gehäuseteil wird ein leichtes Einsetzen bzw. Wiederherausnehmen ermöglicht. Im Normalzustand können die Gehäuseteile durch eine Auslenkung eines Magnetsegments oder eines magnetischen Teils verriegelt werden. Sobald sich ein Magnet von außen nähert, wird das Magnetsegment oder das magnetische Teil im Gehäuse vom Magneten angezogen, und das Gehäuse öffnet sich. Deshalb kann das Gehäuse ohne Doppelverriegelungsmechanismus sicher verschlossen werden.

In der Ausführungsform gemäß Anspruch 2 wird eine Indexplatte mit einer Erkennungs-Lochcodierung in einem Teil eines Glaselementhalters angebracht oder an der Gehäusedecke befestigt und zum Ablesen der Erkennungsnummer eines Glaselements im Auswertegerät benutzt. Personen, die im Besitz der Dosimeter sind, können damit zuverlässig überwacht werden, weil diese Erkennungsnummer als personenbezogene Identifikationsnummer verwendet werden kann.

In der Ausführungsform nach Anspruch 3 kann, wenn ein Glaselementhalter mit Fluoreszenzglaselement in einem unteren Gehäuseteil untergebracht ist, aus der Tatsache, ob das einrastende Teil des Glaselementhalters in den richtungsvorgegebenen Anschlag des unteren Gehäuseteils eingerastet ist, festgestellt werden, ob das Fluoreszenzglaselement richtig eingelegt ist.

Durch das Vorsehen von Filtern gemäß Anspruch 4 kann die Energieabhängigkeit gegenüber Photonenstrahlung und die Abhängigkeit von der Strahlungseinfallsrichtung herabgesetzt werden.

## Kurzbeschreibung der Zeichnungen

Abbildungen 1 bis 6 sind Ansichten zur Erläuterung des ersten bis fünften Teils der Erfindung, wobei
Abbildung 1 eine perspektivische Darstellung eines Glaselementhalters, getrennt in Einzelteile, zeigt,
Abbildung 2 eine perspektivische Darstellung der Außenansicht einer Dosimeterkapsel ist,
Abbildung 3 eine perspektivische Darstellung der Einzelteile ist, welche die Reihenfolge beim Zusammenbau der Dosimeterkapsel zeigt,
Abbildung 4 die Anordnung der Filter zueinander zeigt,
Abbildungen 5a und 5b Schnitte durch die Dosimeterkapsel zeigen, um einen Verriegelungsmechanismus zu erklären,
Abbildung 6 die Positionen der Filter zueinander zeigt und
Abbildungen 7 bis 10 Darstellungen zur Erläuterung eines konventionellen Fluoreszenzglasdosimeters sind, wobei
Abbildung 7 eine perspektivische Darstellung der Einzelteile eines Glaselementhalters ist,
Abbildung 8 ein Schnitt durch den Glaselementhalter zur Erläuterung der Nachteile des konventionellen Dosimeters ist und
Abbildungen 9 und 10 Schnitte durch eine Dosimeterkapsel zur Erläuterung des Verriegelungsmechanismus des Dosimeters darstellen.

## Ausführliche Beschreibung der bevorzugten Ausführungen

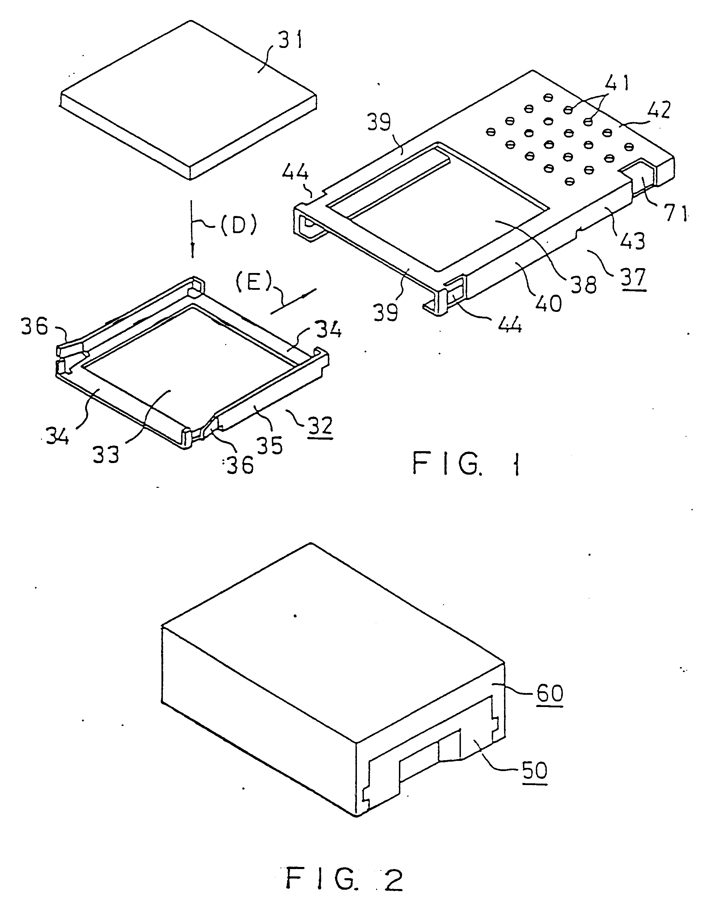

Die Anordnung eines Glaselementhalters als Ausführungsbeispiel der Erfindung wird im folgenden unter Bezugnahme auf Abb. 1 beschrieben. In Abb. 1 bezeichnet die Bezugsnummer 31 ein Fluoreszenzglaselement, das aus einem silberaktivierten Phosphatglas mit hohem Lithium- und Natriumgehalt niedriger Ordnungszahl besteht, jedoch beispielsweise kein Kalium und kein Barium enthält. Das Glaselement kann jedoch je nach Zweck und Einsatz aus einem Gemisch verschiedener Bestandteile (Li, Na, P, 0, Al, Ag und ähnlichen) bestehen. Da das Glaselement einen hohen Anteil an Lithium und Natrium hat, ist insbesondere die Abnahme der Fluoreszenzlichtintensität nach der Bestrahlung sehr gering, und es kann eine gegen Temperaturänderungen stabile Charakteristik erreicht werden.

Die Größe des Fluoreszenzglaselements 31 richtet sich nach den Teilen. Beispielsweise wird ein 16x16x1,5 (mm)-Glaselement verwendet und aus Richtung (D) in Abb. 1 in das innere Halterteil 32 eingelegt. Das innere Halterteil 32 besteht aus dem Maskenrahmen 34 mit einem Fluoreszenzlichtaustrittsfenster 33, dessen Öffnung kleiner ist als die Außenabmessungen des Fluoreszenzglaselements 31, um den gesamten Randbereich einer Fluoreszenzlichtaustrittsfläche des Fluoreszenzglaselements 31 abzudecken. Haltesegmente 35, die das Fluoreszenzglaselement 13 außen halten, sind an den beiden gegenüberliegenden Seiten des Maskenrahmens 34 befestigt. Aus diesem Grund kann mit dem Maskenrahmen 34 der Randbereich auf einer Seitenfläche des Fluoreszenzglaselements 31 über den gesamten Randbereich abgedeckt werden, und das Glaselement kann durch die relativ unelastischen Haltesegmente 35 sicher gehalten werden. Da das hintere Ende jedes Haltesegments 35 zum anderen Segment hin gebogen ist, wird das Glaselement 31 in seiner Bewegung behindert. Deshalb wurden zusätzlich Federsperrklinken 36 angebracht, die nach außen leicht konisch verlaufen und aus den vorderen Enden der Haltesegmente herausragen. Die Federsperrklinken 36 verhindern die Herausnahme des in ein äußeres Halterteil montierten inneren Halterteils, was weiter unten beschrieben wird.

Das auf diese Weise in ein inneres Halterteil 32 eingeführte Fluoreszenzglaselement 31 wird in das äußere Halterteil 37 eingepaßt und wird dabei in der mit einem Pfeil (E) in Abb. 1 angezeigten Richtung geführt. Das äußere Halterteil 37 umfaßt den Maskenrahmen 39 mit dem unteren Fluoreszenzlichtaustrittsfenster 38, dessen Öffnung ungefähr genau so groß ist wie die des Fensters 33 des inneren Halterteils 32, damit der Randbereich der anderen Fluoreszenzlichtaustrittsfläche (eine Vorderseite in Abb. 1) des Fluoreszenzglaselements 31 abgedeckt wird. Die inneren Haltesegmente 40 für den Halter, die einen ]-förmigen Querschnitt haben, sind an den beiden Seiten des Maskenrahmens in der Bewegungsrichtung des inneren Halterteils 32 angebracht. Die Randbereiche der beiden Oberflächen des Fluoreszenzglaselements 31 können deshalb durch den Maskenrahmen 34 des inneren Halters 32 und durch den Maskenrahmen 39 des äußeren Halters 37 völlig abgedeckt werden. Daher kann die Nachweisempfindlichkeit, anders als beim konventionellen Halter, durch Veränderungen der Breite der Glasabschrägung nicht beeinflußt werden. Mit anderen Worten, das durch diffuse Reflexion von den Kantenbereichen der durch ultraviolette Strahlung getroffenen Oberfläche des Fluoreszenzglaselements 31 gestreute Fluoreszenzlicht kann abgedeckt werden.

Der äußere Halter 37 enthält die Indexplatte, die zur Identifizierung des Glaselements mit einer Lochcodierung entlang der Führung des inneren Halters 32 versehen ist und zur Personenidentifikation dient. Die Indexplatte 42 besitzt an den gleichen Seiten wie die Haltesegmente 40 ebenfalls ]-förmige Segmente 43. Die Höhe jedes ]-förmigen Segments 43 wird so eingestellt, daß sie geringer ist als die Höhe des Haltesegments 40, so daß es das innere Halterteil in einer festgelegten Position genau stoppen kann. Die Öffnung 44 ist am vorderen Ende jedes Haltesegments 40 angebracht. Wenn der innere Halter 32 vollständig in den äußeren Halter 37 eingesetzt ist, wird durch die Federkraft die Federsperrklinke 36 des inneren Halterteils in die Öffnungen 44 eingeklinkt. Dadurch wird verhindert, daß das innere Halterteil 32 aus dem äußeren Halterteil 37 rutscht, solange es entgegen der durch einen Pfeil (E) angegebenen Richtung gezogen wird, wobei die Federsperrklinken 36 von Hand oder mechanisch nach innen gedrückt werden.

Mit der Anordnung des beschriebenen Ausführungsbeispiels kann deshalb das Fluoreszenzglaselement 31 leicht in das innere Halterteil 32 schon dadurch eingepaßt werden, daß man es gegen die Innenseite der Haltesegmente 35 drückt. Wenn das innere Halterteil in diesem Zustand in das äußere Halterteil 37 eingesetzt wird, kann es sicher eingestellt und an einer vorher festgelegten Position durch ]-förmige Segmente 43 auf der Seite der Indexplatte 42 gestoppt werden, und die Federsperrklinken 36 des inneren Halterteils 32 werden in die Öffnungen 44 des äußeren Halterteils 37 eingeklinkt, um ein ungewolltes Lösen der beiden Teile zu verhindern. Wenn das Fluoreszenzglaselement 31 am inneren Halterteil 32 und am äußeren Halterteil 37 als Haltevorrichtungen befestigt wird, können alle Randbereiche beider Fluoreszenzlichtaustrittsflächen von den Maskenrahmen 34 und 39 vollständig abgedeckt werden. Die Nachweisempfindlichkeit kann damit durch Veränderung der Breite der Glasabschrägung nicht beeinflußt werden, da die Kantenbereiche des Glaselements vollständig abgedeckt werden können. Ein Fluoreszenzlicht kann deshalb mit hoher Genauigkeit und stabil nachgewiesen werden. Der Halter kann nur durch Anpassung des Fluoreszenzglaselements und Einbringen des inneren Halterteils 32 und des äußeren Halterteils 37 zusammengebaut werden, und dies kann wesentlich zur Verbesserung der Montage beitragen.

Im oben genannten Ausführungsbeispiel sind Federsperrklinken 36 angebracht, um die Herausnahme des inneren Halterteils 32 zu verhindern.

An ihrer Stelle können gebogene Paßstücke angebracht werden. Zur Positionierung des inneren Halterteils 32 werden ]-förmige Segmente 43 der Indexplatte 42 benutzt. Es können aber auch entsprechende Teile ohne Indexplatte 42 mühelos befestigt werden.

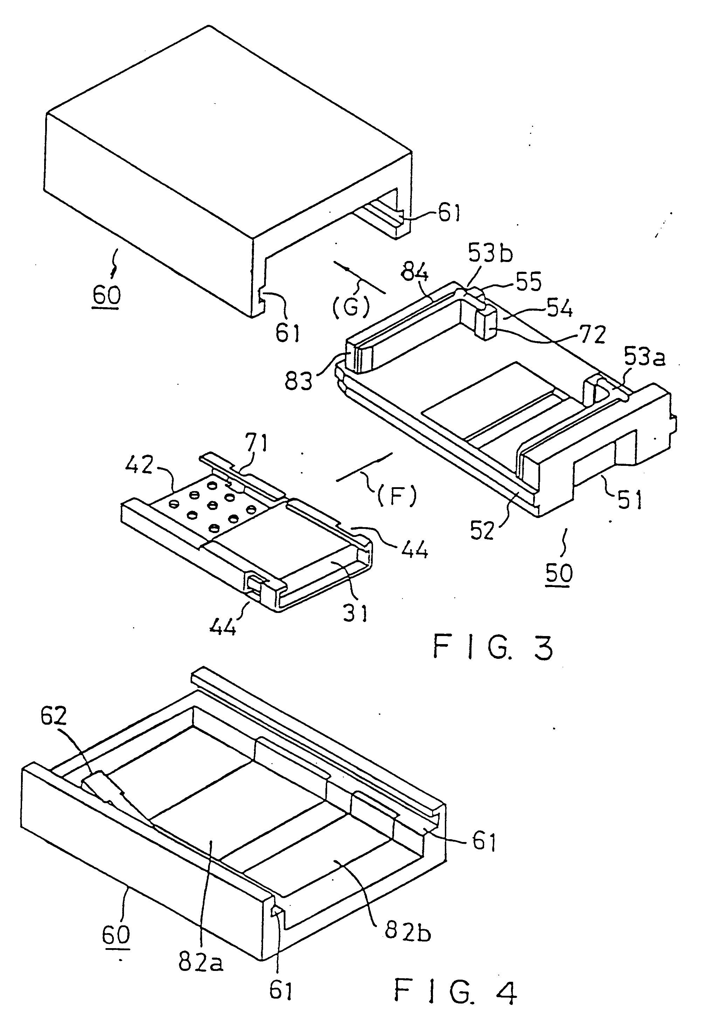

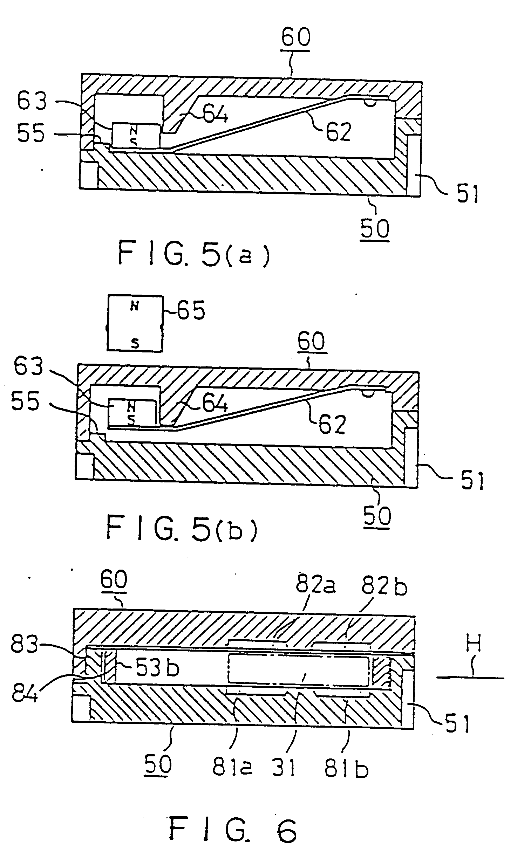

Ein weiteres Ausführungsbeispiel der Erfindung wird im folgenden unter Bezugnahme auf Abb. 2 bis 4 beschrieben. Abbildung 2 ist eine Darstellung der Außenansicht einer Dosimeterkapsel mit Glaselementhalter, Abb. 3 ist eine Darstellung der Einzelteile der Dosimeterkapsel, und Abb. 5 ist eine Darstellung zur Erläuterung eines Verriegelungsmechanismus. Die Kapsel besteht in einzelnen aus dem unteren Gehäuseteil 50 und dem oberen Gehäuseteil 60 ohne den in Abb. 1 gezeigten Glaselementhalter. Im unteren Gehäuseteil 50 ist ein Einrastteil, beispielsweise die Aussparung 51, angebracht, so daß das Einsetzen und die Herausnahme in das bzw. aus dem oberen Gehäuseteil 60 mit dem Finger oder Fingernagel an der Vorderseite möglich ist; Führungselemente 52 mit einem vorstehenden Teil sind in festgelegter Länge angebracht. Die Führungsteile 53a und 53b des Halters ragen in das Innere des unteren Gehäuseteils 50 hinein und positionieren den Glaselementhalter, den sie auch aufnehmen, wenn er aus der von einem Pfeil (F) in Abb. 3 angezeigten Richtung eingeschoben wird. Der Abstand der beiden Führungsteile 53a und 53b ist so groß wie die Länge des Glaselementhalters, und sie haben die Form eines umgedrehten L, um den Halter in einer festgelegten Position stoppen zu können. Der Raum 54 für den Verriegelungsmechanismus liegt der Einführungsseite des Glaselementhalters gegenüber in einem festgelegten Abstand von der Kante. Die Bezugsnummer 55 bezeichnet das Verriegelungsaufnahmesegment als Teil eines Verriegelungsmechanismus.

Das obere Gehäuseteil 60 enthält zwei Vertiefungen als Gegenstück für die Gleitschienen 52, die in die beiden Seitenwände des oberen Gehäuseteils 60 verlaufen. Das obere Gehäuseteil 60 besitzt einen Verriegelungsmechanismus, der dem Raum für den Verriegelungsmechanismus 54 entspricht. Insbesondere verläuft im Verriegelungsmechanismus eine Blattfeder 62 als Sperrteil in die Richtung des Raums für den Verriegelungsmechanismus 54. Ein Ende der Blattfeder ist innen an der Oberseite des Gehäuses befestigt, und am anderen Ende ist ein Magnet mit gegebener Polarität oder ein magnetisches Teil 63 befestigt. Die Sperre 64, welche die Vor- und Rückwärtsbewegung des Magneten oder des magnetischen Teils 63 verhindert, hängt von der Decke des oberen Gehäuseteils 60 herunter. Die Bezugsnummer 65 bezeichnet einen Entriegelungsmagneten. Der Entriegelungsmagnet 65 ist im Auswertegerät angeordnet und dient zur Öffnung einer Dosimeterkapsel.

Bei der Anordnung des oben beschriebenen Ausführungsbeispiels wird daher das untere Gehäuseteil gehalten, solange es den Glaselementhalter aufnimmt, und in der von einem Pfeil (G) in Abb. 3 angegebenen Richtung gedrückt, wobei die rückwärtigen Teile der Gleitschienen 52 des unteren Gehäuseteils 50 in die entsprechenden Führungsrillen des unteren Gehäuseteils 60 eingreifen, so daß das untere Gehäuseteil 50 mit Hilfe der Führungsrillen 61 ohne weiteres in das obere Gehäuseteil 60 eingesetzt werden kann. Beim Einbringen von Gehäuseteil 50 in Gehäuseteil 60 wird die Blattfeder 62 als Verriegelungsmechanismus in der von der Decke des oberen Gehäuseteils 60 wegführenden Richtung ausgelenkt, was aus Abb. 5a hervorgeht.

Wenn das untere Gehäuseteil 50 tiefer eingefahren wird, berührt das Verriegelungsaufnahmesegment 55 des unteres Gehäuseteils 50 die untere Fläche der Blattfeder 62 und drückt sie gegen die Decke des oberen Gehäuseteils 60. Deshalb kann das untere Gehäuseteil 50 leicht in das obere Gehäuseteil 60 eingesetzt werden. In einem Zustand, in dem sich das komplette untere Gehäuseteil 50 im oberen Gehäuseteil 60 befindet, wird die Blattfeder 62 in einer von der Decke des oberen Gehäuses 60 wegführenden Richtung wie in Abb. 5a ausgelenkt, und der Magnet oder das magnetische Teil 63 wird vollkommen eingespannt zwischen Verriegelungsaufnahmeteil 55 des unteren Gehäuseteils 50 und Bewegungshemmteil 64 des oberen Gehäuseteils 60. Dadurch werden die Gehäuseteile auf sehr einfache Weise vollständig geschlossen. Deshalb rastet der Magnet oder das magnetische Teil 63 in das Bewegungshemmteil 64 auch dann ein, wenn das untere Gehäuseteil 50 in diesem Zustand nach außen gezogen werden soll, und das untere Gehäuseteil kann nicht entfernt werden. In diesem Zustand kann das Dosimeter nur von autorisierten Personen geöffnet werden. Um das untere Gehäuseteil 50 zu entfernen, wird der Magnet 65 mit der dem Magneten oder magnetischen Teil 63 entgegengesetzten Polarität von außen herangeführt, was Abb. 5(b) zeigt, der Magnet oder das magnetische Teil 63 wird in Richtung Decke des oberen Gehäuseteils 60 nach oben oder unten verschoben und in der in Abb. 5(b) gezeigten Position angehalten. Deshalb kann er/es leicht entfernt werden, wenn das untere Gehäuseteil 50 in diesem Zustand herausgezogen wird. Dieser Verriegelungsvorgang ist möglich, wenn das Verriegelungsteil an einem unteren Gehäuseteil befestigt ist. Das ist jedoch nicht von praktischem Nutzen, weil sich das Verriegelungsteil bei der Einführung und Herausnahme des Glaselementhalters störend auswirkt.

Im folgenden wird ein weiteres Ausführungsbeispiel der Erfindung unter Bezugnahme auf Abb. 1 beschrieben. In einem erfindungsgemäßen Dosimeter, abgebildet in Abb. 1, ist der innere Halter 32, in den das Fluoreszenzglaselement 31 eingepaßt ist, in den äußeren Halter 37 einschiebbar, so daß sämtliche Randbereiche der Fluoreszenzlichtaustrittsflächen des Fluoreszenzglaselements 31 durch die Maskenrahmen 34 und 39 in der oben beschriebenen Weise abgedeckt werden. Ein besonderer Unterschied besteht darin, daß die Seiten des äußeren Halters 37 entgegen der Einschiebrichtung des inneren Halters 32 in ausreichender Länge erweitert sind, einer Indexplatte 42, die zur Identifikation und Überwachung einer Person mit einer Lochcodierung ausgestattet ist, und daß auf dem erweiterten Teil ein Ort zum Einbau des Dosimeterglases oder ähnlichem vorhanden ist.

Mit dieser Anordnung wird das Dosimeter in ein Auswertegerät eingebracht, und nur das Fluoreszenzglaselement 31 wird aus dem Dosimeter herausgenommen, bzw. der Glaselementhalter mit dem Element 31 wird zur Anzeige der Strahlendosis daraus entfernt oder ein Lochmustererkennungscode wird während des Austauschs von Glaselementhaltern optisch abgelesen. Auf diese Weise kann der Erkennungscode ohne weiteres in einem Speicher gespeichert werden, und ein mit Dosimeter ausgestatteter Mitarbeiter sowie die von diesem Mitarbeiter aufgenommene Strahlendosis, einschließlich früherer Expositionen, können zu einem späteren Zeitpunkt überprüft werden. Da die Indexplatte integraler Bestandteil des äußeren Halters 37 ist, kann sie darüber hinaus leicht gehandhabt und geprüft werden.

Die Indexplatte 42 ist ein integraler Bestandteil des äußeren Halters 37, kann jedoch auch von diesem getrennt angebracht werden, beispielsweise ganz einfach durch Eindrücken in die Decke des unteren Gehäuseteils 50 oder des oberen Gehäuseteils 60 befestigt werden. Es können beispielsweise Blattfedern aus der Gehäusedecke herausragen, die in zwei bzw. vier Seiten der Indexplatte 42 passen, und die Indexplatte kann zwischen die Blattfedern gedrückt und dadurch daran befestigt werden.

Im folgenden wird ein weiteres Ausführungsbeispiel der Erfindung unter Bezugnahme auf Abb. 1 bis 3 beschrieben. In diesem Dosimeter entsteht das einrastende Teil 71 durch Aussparen einer bestimmten Fläche des ]-förmigen Segments 43 der Indexplatte 42, die aus dem äußeren Halter 37 herausragt, oder des Haltesegments 40, das aus dem äußeren Halter 37 herausragt. Der Anschlag 72 für das Glaselement ist am unteren Gehäuseteil 50 unmittelbar neben dem Endteil des Führungsteils 53b des Halters angebracht, so daß das Fluoreszenzglaselement 31 an der Vorderseite des Gehäuses sicher positioniert werden kann. Insbesondere klinkt das einrastende Teil 71 des äußeren Halters 37, sobald der Glaselementhalter am unteren Gehäuseteil 50 von der Seite oder von oben eingeführt ist (vgl. Abb. 3), in den Anschlag 72 des Glaselements im unteren Gehäuseteil 50 ein, und das Fluoreszenzglaselement 31 wird an der Vorderseite des Gehäuses genau positioniert. Damit kann ein Positionierfehler des Fluoreszenzglaselements 31 im Innern der Dosimeterkapsel verhindert werden. Zu beachten ist, daß jeweils ein einrastendes Teil 71 und ein Anschlag 72 für das Glaselement vorhanden sind, jedoch auch zwei vorhanden sein können. In diesem Fall sind diese Teile selbstverständlich in einem bestimmten Abstand zueinander angebracht.

Im folgenden wird ein weiteres Ausführungsbeispiel der Erfindung unter Bezugnahme auf Abb. 1, 3 und 6 beschrieben. In diesem Dosimeter werden die Randbereiche beider Fluoreszenzlichtaustrittsflächen des Fluoreszenzglaselements 31 mit Hilfe der Maskenrahmen 34 und 39 des inneren Halterteils 32 und des äußeren Halterteils 37 in derselben Weise wie beim ersten Teil der Erfindung abgedeckt. Ein Unterschied zwischen erstem und fünftem Teil der Erfindung besteht darin, daß Zinnfilter an den Seitenflächen des unteren Gehäuseteils 50 und des oberen Gehäuseteils 60 gegenüber den Fluoreszenzlichtaustrittsflächen angebracht sind, und zwar senkrecht zu der Seite des Fluoreszenzglaselements 31, auf welcher die ultraviolette Strahlung auftrifft (angezeigt durch einen Pfeil (H) in Abb. 6). Eine denkbare Position ist angezeigt durch eine aus langen und kurzen Strichen bestehende Linie in Abb. 6, d.h., die beiden großen Seitenflächen des Elements 31 dienen als Fluoreszenzlichtaustrittsflächen. Zinnfilterpaare (81a, 81b), (82, 82b) sind an den Deckenflächen des unteren Gehäuseteils 50 und des oberen Gehäuseteils 60 angebracht, um die Energieabhängigkeit des Ansprechvermögens gegenüber Photonenstrahlung herabsetzen zu können. Mit diesen Zinnfiltern (81a, 81b), (82a, 82b) wird der Empfindlichkeitsunterschied bei Expositionen mit unterschiedlicher Photonenenergie berücksichtigt, und sie sind so angeordnet, daß sich ein festgelegter Spalt zwischen gegenüberliegenden Flächen befindet und sie nach außen konisch verlaufen, damit die Abhängigkeit von der Einfallsrichtung der Strahlung herabgesetzt werden kann. Der Stopper 83, der an das rückwärtige Ende im oberen Gehäuseteil anstößt und das obere Gehäuseteil nach oben abschließt, ragt aus der rückwärtigen Seite des unteren Gehäuseteils 50 heraus, was aus Abb. 3 ersichtlich ist. Die Filter 84 zur Herabsetzung der Richtungsabhängigkeit gegenüber der einfallenden Strahlung sind zwischen Stopper 83 und Halterführungsteil 53b auf der diesen gegenüberliegenden Seite angebracht. Die Filter 84 zur Herabsetzung der Richtungsabhängigkeit gegenüber der einfallenden Strahlung sind auf zwei Seiten angeordnet, d.h. einer Einfallseite für ultraviolette Strahlung und einer gegenüberliegenden Seite des oberen Gehäuseteils. Diese Filter können jedoch auf zwei anderen Seiten angebracht sein, d.h. auf allen Seitenflächen des oberen oder des unteren Gehäuseteils, so daß die Richtungsabhängigkeit definiert verändert werden kann.

Erfindungsgemäß kann, wie oben beschrieben, ein Fluoreszenzglaselement leicht am inneren Halterteil befestigt werden, da es eingeschoben werden kann, und die Randbereiche beider Fluoreszenzlichtaustrittsflächen des Fluoreszenzglaselements können insgesamt durch die Maskenrahmen des inneren und äußeren Halters nach Befestigung des Fluoreszenzglaselements abgedeckt werden. Schwankungen der Nachweisempfindlichkeit infolge Änderungen der Abschrägung des Fluoreszenzglaselements können damit ausgeschaltet werden. Die Kapsel kann durch eine einfache Anordnung ohne Doppelverriegelung wie beim konventionellen Aufbau sicher und vollkommen dicht verschlossen werden. Nur wenn ein spezieller Entriegelungsmechanismus benutzt wird, kann der Glaselementhalter leicht entfernt werden. In den vorteilhaften Ausführungsformen kann die Zugangsberechtigung einer Person wirksam durch Anbringen einer Indexplatte kontrolliert werden, und eine Strahlenüberwachung ist ohne Einschränkung möglich. Ein Fluoreszenzglaselement kann fehlerlos in der richtigen Weise eingelegt oder herausgenommen werden und die Energieabhängigkeit gegenüber Photonenstrahlung und Richtungsabhängigkeit gegenüber einfallender Strahlung herabgesetzt werden.

**Patentansprüche**

1. Fluoreszenzglasdosimeter bestehen aus
   a) einem Fluoreszenzglaselement (31)
   b) einem Glaselementhalter mit mindestens einem Maskenrahmen und
   c) einem aus mindestens zwei verrieglbaren Teilen bestehenden Gehäuse,
   gekennzeichnet durch
   d) einem Glaselementhalter mit Innenhalter (32) der einen Maskenrahmen (24) zur Abdeckung eines Randbereiches einer Fluoreszenzlichtaustrittsfläche auf der Seite für die Aussendung von Fluoreszenzlicht des Fluoreszenzglaselements (31) und zum Halten des Fluoreszenzglaselements (31) an der Außenseite besitzt, wobei mindetsens eine Fläche, auf der ultraviolette Strahlung auftrifft, ohne Abdeckung bleibt, und ein äußeres Halterteil (37), in das das innere Halterteil (32) durch Gleiten eingepaßt wird, mit einem Maskenrahmen (39) zur Abdeckung des Randbereichs der anderen Fluoreszenzlichtaustrittsfläche als Seite für die Aussendung des Fluoreszenzlichts des Fluoreszenzglaselements (31),
   e) ein Gehäuse bestehend aus einem unteren Gehäuseteil (50) mit Gleitschienen (52) von bestimmter Länge auf beiden Seitenflächen und
   einem oberen Gehäuseteil (60) mit Führungsrillen (61) in die die Gleitschienen (52) des unteren Gehäuseteils (50) eingreifen,
   f) ein Verriegelungsteil (63) am oberen Gehäuseteil (60) welches beim verschließen in Richtung des unteren Gehäuseteils (50) ausgelenkt wird und das in entgegengesetzter Richtung ausgelenkt wird, um die Verriegelung zu lösen, wenn sich von außen ein Magnet (65) nähert, wobei das Verriegelungsteil (63) mit einem Magnet oder einem magnetischen Teil ausgestattet ist.

2. Fluoreszenzglasdosimeter nach Anspruch 1, dadurch gekennzeichnet, daß
   das äußere Halteteil (37) eine Indexplatte (42) mit einer Lochkodierung trägt.

3. Fluoreszenzglasdosimeter nach Anspruch 1 oder 2, dadurch gekennzeichnet, daß
   das untere Gehäuseteil (50) zwei L-förmige Führungselemente (53a, 53b) für den Glaselemenmenthalter und einen Anschlag (72), welcher in eine Ausnehmung (71) des Halteteils (37) eingreift, aufweist.

4. Fluoreszenzglasdosimter nach einem der Ansprüche 1 bis 3, dadurch gekennzeichnet, daß an den Innenwänden des oberen und des unteren Gehäuseteils (50, 60), welche dem Maskenrahmen (34, 39) gegenüberliegen, Filter (81a, 81b, 82a, 82b) zur Herabsetzung der Energieabhängigkeit gegenüber Photoneustrahlung angebracht sind, die jeweils mindestens ein Metall aus der Gruppe Sn, Cu, Fe, Al, Pb, Cd, enthalten und daß Filter (84) zur Herabsetzung der Richtungsabhängigkeit gegenüber einfallender Strahlung in der Nähe der Einbauposition des Glaselemthalters im unteren Gehäuseteil (50) an einer Einfallseite der ultravioletten Strahlung sowie auf einer gegenüberliegenden Seite oder auf sämtlichen Seitenflächen angebracht sind.

5. Fluoreszenzglasdosimeter nach einem der Ansprüche 1 bis 4, dadurch gekennzeichnet, daß der Innenhalter (32) Sperrklinken (36) trägt, die in Ausnehmungen (44) des äußeren Halters (37) einklinkbar sind.

**Claims**

1. Fluorescent glass dosimeter, comprising
   a) a fluorescent glass element (31);
   b) a glass element holder having at least one mask frame; and
   c) a housing comprising at least two lockable portions;
   characterised by
   d) a glass element holder having an inner holder (32) for one mask frame (24) for covering an edge region of a fluorescent light outlet face on the side for the emission of fluorescent light from the fluorescent glass element (31) and for retaining the fluorescent glass element (31) on the outside, wherein at least one face, upon which ultraviolet radiation impinges, remains without any cover, and having an outer holder (37), into which the inner holder (32) is fitted by a sliding movement, provided with a mask frame (39) for covering the edge region of the other fluorescent light outlet face, which serves as the side for the emission of the fluorescent light from the fluorescent glass element (31);
   e) a housing comprising a lower housing portion (50), provided with slide rails (52) of a predetermined length on both lateral faces, and an upper housing portion (60), provided with guide grooves (61), in which the slide rails (52) of the lower housing portion (50) engage;

f) a locking member (63) on the upper housing portion (60), which is deflected in the direction of the lower housing portion (50) for locking purposes, and which is deflected in the opposite direction in order to release the locking when a magnet (65) approaches from externally, the locking member (63) being provided with a magnet or a magnetic member.

2. Fluorescent glass dosimeter according to claim 1, characterised in that the outer holder (37) has an index plate (42) provided with a perforated coding.

3. Fluorescent glass dosimeter according to claim 1 or 2, characterised in that the lower housing portion (50) has two L-shaped guide members (53a, 53b) for the glass element holder and a stop member (72), which engages in a recess (71) in the holder (37).

4. Fluorescent glass dosimeter according to one of claims 1 to 3, characterised in that filters (81a, 81b, 82a, 82b) for reducing the energy dependency relative to photon radiation are mounted on the inside walls of the upper and lower housing portions (50, 60), which are situated opposite the mask frame (34, 39), each of said filters containing a metal selected from the group comprising Sn, Cu, Fe, Al, Pb and Cd, and in that filters (84) for reducing the direction dependency relative to impinging radiation are mounted in the vicinity of the installation position of the glass element holder in the lower housing portion (50) on an inlet side for the ultraviolet radiation and on an oppositely situated side or on all of the lateral faces.

5. Fluorescent glass dosimeter according to one of claims 1 to 4, characterised in that the inner holder (32) has lock pawls (36), which are engageable in recesses (44) in the outer holder (37).

**Revendications**

1. Dosimètre en verre fluorescent comprenant:
   a) un élément en verre fluorescent (31),
   b) un support d'élément en verre avec au moins un cadre de masque et,
   c) un boîtier constitué d'au moins deux pièces verrouillables,
   caractérisé par :

   d) un support d'élément en verre avec support interne (32) de l'un des cadres de masque (24) pour recouvrir un domaine de bord d'une face de sortie de lumière fluorescente du côté d'émission de la lumière fluorescente de l'élément en verre fluorescent (31) et pour maintenir l'élément en verre fluorescent (31) sur la face externe, au moins une face, sur laquelle tombe le rayonnement ultraviolet, restant sans recouvrement, et une pièce de support externe (37), dans laquelle on insère par glissement la pièce de support interne (32) avec un cadre de masque (39) pour recouvrir le domaine de bord de l'autre face de sortie de lumière fluorescente comme face d'émission de lumière fluorescente de l'élément en verre fluorescent (31),
   e) un boîtier constitué d'une pièce de boîtier (50) inférieure avec des rails (52) de glissement d'une longueur déterminée sur les deux faces latérales et une pièce de boîtier supérieure (60) avec des rainures de guidage (61) dans lesquelles sont en prise les rails de glissement (52) de la pièce de boîtier inférieure (50),
   f) une pièce de verrouillage (63) sur la pièce de boîtier supérieure (60) qui est écartée pour verrouillage en direction de la pièce de boîtier (50) inférieure et qu'on écarte en sens inverse, pour supprimer le verrouillage, quand on approche un aimant (65) de l'extérieur, la pièce de verrouillage (63) étant équipée d'un aimant ou d'une pièce aimantée.

2. Dosimètre en verre fluorescent selon la revendication 1, caractérisé en ce que la pièce support externe (37) porte une plaque d'index (42) avec un codage à trou.

3. Dosimètre en verre fluorescent selon la revendication 1 ou 2, caractérisé en ce que la pièce de boîtier (50) inférieure présente deux éléments de guidage en forme de L (53a, 53b) pour le support d'élément en verre et une butée (72) qui est en prise dans un évidement (71) de la pièce de support (37).

4. Dosimètre en verre fluorescent selon l'une des revendications 1 à 3, caractérisé en ce que sur les parois internes de la pièce de boîtier supérieure et de la pièce de boîtier inférieure (50, 60), on place des filtres (81a, 81b, 82a, 82b) qui font face au cadre de masque (34, 39) pour abaisser la sensibilité énergétique vis-à-vis du rayonnement photonique, chacun comprenant au moins un métal du groupe Sn, Cu, Fe, Al, Pb, Cd en ce et qu'on place le filtre (84) destiné à diminuer la sensibilité à l'incidence du rayonnement incident, à proximité de la position de montage du support d'élément en verre dans la pièce de boîtier (50) inférieure sur une face d'incidence du rayonnement ultraviolet ainsi que sur une face opposée ou sur toutes les faces latérales.

5. Dosimètre en verre fluorescent selon l'une des revendications 1 à 4, caractérisé en ce que le support interne (32) porte des cliquets d'arrêt (36) qui peuvent s'encliqueter dans des évidements (44) du support externe (37).

FIG. 1

FIG. 2

F I G. 3

F I G. 4

F I G. 5(a)

F I G. 5(b)

F I G. 6

FIG. 7

FIG. 8

FIG. 9

FIG. 10